# EUROPEAN PATENT APPLICATION

(11) **EP 2 476 610 A1**
(43) Date of publication of application: **18.07.2012**
(21) Application number: 10813803.3
(22) Date of filing: 03.09.2010
(51) Int. Cl.: B63B 25/04, B63B 19/12, B63B 27/25, B65G 51/03

(54) **BULK CARRIER AND BULK CARGO BARGE**

(30) Priority: 07.09.2009 JP 2009205967
(71) Applicant: Mitsui Engineering & Shipbuilding Co., Ltd., Chuo-ku Tokyo 104-8439 (JP); Mitsui O.S.K. Lines, Ltd., Tokyo 105-8688 (JP)
(72) Inventor: TAKANO, Kotaro, Tokyo 104-8439 (JP); NAGASAWA, Masahiro, Tokyo 104-8439 (JP); MOCHIZUKI, Koji, Tokyo 104-8439 (JP); SUZUKI, Hirofumi, Tokyo 104-8439 (JP); YOKOTA, Hiroaki, Tokyo 104-8439 (JP); KAWAGOE, Yoshikazu, Tokyo 105-8688 (JP); YAMASAKI, Jin, Tokyo 105-8688 (JP); MIWA, Kohei, Tokyo 105-8688 (JP)
(74) Representative: WSL Patentanwälte Partnerschaftsgesellschaft
(86) International application number: PCT/JP2010/065127
(87) International publication number: WO 2011/027856

(57) **Abstract**

Provided is a bulk cargo ship and a bulk cargo barge each of which is capable of efficiently transporting even particulates that are not desired to be damaged and contaminated, such as polymer pellets. A bulk cargo ship 1, 1A on which a dry bulk cargo B is loaded is configured as follows in order to reduce an amount of residue at the time of unloading the dry bulk cargo B and to eliminate any shadow area so that contamination at the time of loading a new cargo can be prevented by cleaning off a residual cargo by water cleaning. A cargo hold wall of a cargo hold 10, 10A in which the dry bulk cargo B is loaded is formed smoothly while no frame member protruding toward an inside of the cargo hold 10, 10A is provided on the cargo hold wall. A discharge port 15, 15A having an inclined portion 12, 12A is provided in a lower portion of the cargo hold 10, 10A. A gas transport pipe 22 for unloading, by means of a flow of gas A, the dry bulk cargo B discharged from the discharge port 15, 15A through a valve 21a is provided to be connected to the discharge port 15, 15A.

## Description

### TECHNICAL FIELD

The present invention relates to a bulk cargo ship and a bulk cargo barge that can transport even particulates such as polymer pellets, which have been transported in the form of bag in the conventional technique because such particulates are not desired to be damaged and contaminated.

### BACKGROUND ART

In the conventional technique, when polymer pellets are transported by seaborne transportation by a ship, the polymer pellets are packed in bags and containers in which the bags are loaded are transported by a container ship.

The polymer pellets are formed of low-density polyethylene, high-density polyethylene, polypropylene having transparency and crystallinity (95%) and the like, which are called polymers, in pellet shape having a size of about 3 mm in diameter × 3 mm in length to 6 mm in diameter × 6 mm in length. These polymer pellets have the following physical properties: a specific gravity of about 0.9 to 1.0, a relatively small bulk specific gravity of about 0.5, and a repose angle of about 30 degrees. The low-density polyethylene has a specific gravity of about 0.92 and manufactured under high pressure. The high-density polyethylene has a specific gravity of about 0.95 and manufactured under low pressure. The polypropylene has a specific gravity of about 0.9.

These polymers are manufactured as follows. In the oil refining industry, crude oil is distilled to be separate into petroleum gas, gasoline, naphtha (crude gasoline), kerosene, light oil, heavy oil, and asphalt, in accordance with differences of boiling points. Among these, naphtha is thermally cracked using a naphtha cracker to be changed into substances having simple structures, and each of the substances such as ethylene, propylene, butylene and the like is extracted. The ethylene, propylene, and the like are chemically reacted by polymerization reaction, in which molecules in the same substance are bonded each other, to manufacture polymers such as polyethylene or polypropylene having different properties.

Since these polymers have flammable properties, the polymer in powder state may form explosive gas mixture, leading to a dangerous condition. However, the polymer in pellet form has no dangerousness in handling at ordinary temperature. In addition, the polymer in pellet is physiologically inactive, and has no specific toxicity for human body. Moreover, the polymer in pellet has no reactivity with water, self-reactivity and explosibility, and is stable at ordinary temperature. However, when the pellets are spilled, workers may tumble by losing their footing. Therefore, spill prevention and recovery at the time of spill are important. Particularly, when pellets are spilled into a water region at the time of transport, animals may swallow the pellets to be choked. Therefore, caution is required.

For many types of polymers, the molding the polymer with water attached to the surface causes defect in surfaces, defect in appearance, and deterioration in mechanical properties (strength), of the products. In addition, damages in surfaces of pellets are not desired because cracked fine polymers that are generated by the damage of the pellets become contamination. For this reason, it is desired that abrasion of pellets on an inner surface of a pipe or a cargo hold be avoided in order to prevent generation of defects in surfaces of the pellets. Moreover, since contamination of pieces of rust or paint, or other type of pellets is not desired, mixing with paint, rust or other type of pellets should to be avoided. For this reason, as described above, in the conventional technique, when polymer pellets are transported by seaborne transportation or waterborne transportation, the polymer pellets are packed in bags and containers in which the bags are loaded are transported by a container ship.

However, this transportation method using bags and containers requires human or machine operations, for the operation of packing pellets into bags, the operation of loading the bags into containers, the operation of cutting the bags to open, and the operation of taking out the pellets from the bags, and the like. Accordingly this method has a problem of low efficiency. In addition, there is another problem of waste in resources due to packing materials such as bags, used for transportation of pellets in small lots. Worldwide growth of demand of polymer pellets is expected to expand, and an effective seaborne transportation method has been desired in the industry.

On the other hand, when such particulates having very small bulk specific gravity of about 0.5 are transported by ship in bulk, the center of gravity of the ship becomes higher. Moreover, since particulates easily move laterally in a hold of the ship, a phenomenon of movement of the cargo with roll is likely to occur, which is similar to the free surface effect in a water tank. For this reason, this causes a problem of the ship being not capable to have sufficient stability against roll. Therefore, it is required that the center of gravity of the ship should be set at such a position that the ship can maintain enough stability.

In addition, since a cargo such as polymer pellets is not desired to be damaged or contaminated, it has been considered to be not preferable from the perspective of quality management of cargos to load and transport a cargo in a cargo hold in which a frame member protrudes inside the cargo hold or the cargo is separated from outside air only by a weatherproof hatch cover like a bulk cargo ship of the conventional art. Moreover, in the cargo handling in a bulk cargo ship of the conventional art, it is also not preferable from the perspective of quality management of cargos to unload a cargo by a cargo handling grab or other equipment. Furthermore, in order to increase commercial value, there is a challenge in which a cargo is desirably transported in dry condition.

A Ship for transporting coal, wheat grains, chips, or the like in bulk is generally called a dry bulk cargo ship or a bulk carrier, and a cargo hold of such ship usually has a structure as follows as described in Japanese utility model application *Kokai* publication No. Sho 62-165193. The cargo hold is enclosed with an inner bottom plating with a double bottom, a side plating, an upper deck, and bulkheads. A hopper side tank and a top side tank are disposed at lower and upper portions of the ship sides of the cargo hold, respectively. A hatch is opened in the upper deck of the cargo hold, and the hatch has a structure of being covered with a hatch cover.

In such a dry bulk cargo ship, frame members of the upper deck and the side plating are provided inside of the cargo hold in protruding state. In addition, the bulkheads, which divide the ship in the fore-aft direction and are also used as walls of the cargo hold, are often formed in uneven shape by corrugating process, or the like.

In addition, a dry bulk cargo is unloaded from the lower portion of the cargo hold as follows as described in Japanese patent application *Kokai* publication No. Hei 5-124576. Specifically, the dry bulk cargo (bulk) being cut out from the lower end of each cargo hold is conveyed to the fore side or the aft side of the ship by an endless cutout conveyor, which extends in the fore-aft direction, and then is transferred to another conveyor to convey to a conveyor in on-shore cargo handling equipment.

In addition, the following powder transporting ship has been suggested for transportation of a powder such as a powder cement as described in Japanese patent application *Kokai* publication No. 2002-356194. Specifically, even with a flat bottom, the powder transporting ship enables a powder filled in a hold to be taken out with no residual powder, by destroying the state of the powder by compressed air, and is capable of maintaining a large effective volume. This powder transporting ship is provided with an inclined portion (with an angle of about 8 degrees) to the center of the bottom portion of the cargo hold. At the inclined portion, the flowability of a powder is ensured by blowing compressed air from the bottom portion of an air blow sheet. In addition, compressed air is blown from an air-jetting nozzle disposed on the upper position of the inclined portion in a direction to the flow of the powder.

However, strict management for reduction in an amount of residue of the cargo in the cargo hold is required for a polymer pellet carrying ship, compared with a cement carrying ship. In addition, washing inside of the cargo hold with water is required for the polymer pellet carrying ship at the time of loading a new cargo. With consideration of these requirements, it is not suitable for the polymer pellet carrying ship to employ such an air-jetting method using a campus as used for the cement carrying ship, or the method of conveying the dry bulk cargo by conveyors.

### PRIOR ART DOCUMENTS

### PATENT DOCUMENTS

Patent Document 1: Japanese utility model application *Kokai* publication No. Sho 62-165193
Patent Document 2: Japanese patent application *Kokai* publication No. Hei 5-124576
Patent Document 3: Japanese patent application *Kokai* publication No. 2002-356194

### SUMMARY OF THE INVENTION

### PROBLEMS TO BE SOLVED BY THE INVENTION

The present invention has been made in view of the above-described circumstances, and an object of the present invention is to provide a bulk cargo ship and a bulk cargo barge each of which is capable of efficiently transporting even particulates that are not desired to be damaged and contaminated, such as polymer pellets.

### MEANS FOR SOLVING THE PROBLEMS

A bulk cargo ship according to the present invention for achieving the above-described object is a bulk cargo ship on which a dry bulk cargo is loaded, the bulk cargo ship being configured in such a manner that a cargo hold wall of a cargo hold in which the dry bulk cargo is loaded is formed smoothly while no frame member protruding toward an inside of the cargo hold is provided on the cargo hold wall, a discharge port having an inclined portion is provided in a lower portion of the cargo hold, and a gas transport pipe for unloading, by means of a flow of gas, the dry bulk cargo discharged from the discharge port through a valve is provided to be connected to the discharge port.

This configuration makes it possible to reduce an amount of residue of a dry bulk cargo at the time of unloading and to clean off a residual cargo by water cleaning because shadow areas are eliminated. As a result, contamination at the time of loading a new cargo can be prevented.

In addition, a constant-flow discharge valve formed of a valve such as a rotary valve is provided at a discharge port in order to prevent a dry bulk cargo from dropping down to a gas transport pipe during the storing of the dry bulk cargos to the cargo hold in cargo loading. In addition, particulates are transported by a gas, such as air, dried air or inert gasses that is fed to the gas transport pipe, and the dry bulk cargo in an adequate amount to the flow rate of the gas is fed to the gas transport pipe during cargo unloading. In other words, the dry bulk cargo is unloaded from the discharge port at the lower portion of the cargo hold to the upper deck through the gas transport pipe permanently installed in the ship body. As described above, unloading can be easily and effectively performed by transporting the dry bulk cargo with gas. Here, with regard to gas transport, a vacuum suction method may be used instead of the method of gas pressure transportation using air or the like.

When a dry bulk cargo such as polymer pellets which is not desired to be exposed to moisture is transported, the following procedures are taken in order to prevent the dry bulk cargo in the cargo hold from containing moisture. At the time of cargo handling such as cargo loading and unloading, dried air is supplied into the cargo hold and the gas transport pipe from an air-feeding system such as an air drying facility in an on-shore facility, a blower or a compressor. At the time of other operations than cargo handling, and at the time of transporting, dried air is supplied into the cargo hold from an air dryer and an air blower installed on the ship.

In the above-described bulk cargo ship, the cargo hold is configured by including: an inlet port in an upper portion of the cargo hold, the inlet port allowing the dry bulk cargo to be dropped down therethrough; and a plurality of discharge portions provided in a lower portion of the single cargo hold, the plurality of discharge portions each having an inclined portion.

This configuration makes it possible to lower a height of the inclined portion around the discharge port, and to lower the center of gravity of the cargo hold, as well as the center of gravity of the cargo hold with a cargo loaded therein. With this configuration, the lowering of the center of gravity of the entire ship and stability performance against roll can be ensured. In addition, dead space around the outside of the inclined portion can be reduced by lowering a height of the inclined portion. Since use efficiency for space is increased due to this reduction of dead space, load capacity can be increased.

In the above-described bulk cargo ship, a plurality of the cargo holds are disposed in a width direction of the ship, so that the lateral width of each cargo hold is decreased and moving distance of the dry bulk cargo due to motions of the ship body at the time of heavy weather is reduced. The suppressing of transversal moving distance of the dry bulk cargo ensures stability performance against roll of the bulk cargo ship.

In the above-described bulk cargo ship, the cargo hold wall of the cargo hold may have such a structure as not to come into contact with liquid. In other words, the a cargo hold is provided in such a way that the cargo hold is not adjacent to liquid such as ballast water in a ballast tank, fuel in a fuel tank, sea water or water outside the ship body.

This configuration makes it possible to prevent generation of dew condensation on the cargo hold wall of the cargo hold. Employing this structure enables a hydrophobic dry bulk cargo such as polymer pellets which deteriorates in quality by water attached thereto to be loaded on the bulk cargo ship. When this hydrophobic dry bulk cargo is transported, dry air is blown into the cargo hold at the time of cargo handling to prevent the dry bulk cargo from contacting with air containing much moisture.

In the above-described bulk cargo ship, the cargo hold and the ship body may be integrally constructed. Alternatively, the cargo hold may be installed in a ship body while a part of the cargo hold is manufactured separately from the ship body, the part being formed of a rust-resistant material. With this configuration employed, when the cargo hold wall of each cargo hold 10A is formed by using a special steel material such as clad steel as a rust-resistant material, the manufacture of a bulk cargo ship is facilitated by separately manufacturing each cargo hold and by installing, in the ship body, the cargo hold in which a part formed of the rust-resistant metal is almost completed. In addition, it is also made possible to employ a cargo hold formed of a non-metal material such as FRP as the rust-resistant material.

In the above-described bulk cargo ship, the cargo hold may be caused to protrude from an upper deck, and a portion between a sidewall of the cargo hold and the upper deck is formed to have a watertight or weathertight structure. This configuration simplifies the structure, compared with a structure in which the cargo hold is completely covered with the upper deck or a cover. With this simplification of the structure, the weight can be reduced and thus the stability performance against roll can easily be ensured. In addition, a cargo volume can be increased by employing the structure in which this cargo hold is protruded from the upper deck, compared with the structure in which the upper deck is used as the upper structure of the cargo hold.

In addition, a bulk cargo barge for achieving the above-described object may be obtained by forming the above-described bulk cargo ship into a barge ship having no propulsion system. The bulk cargo barge of this configuration can provide the same effects as those of the above-described bulk cargo ship.

### EFFECTS OF THE INVENTION

According to the bulk cargo ship and the bulk cargo barge of the present invention, particulates such as polymer pellets that are packed in bags and transported using containers in order to avoid damage and contamination in the conventional art can be transported in bulk state without damage to the particulates. In addition, the operation of packing particulates in bags, the operation of loading the bags into containers, the operation of taking the particulates out of the bags, and other operations that have been performed in the conventional art can be eliminated, so that the operation efficiency at the time of transport can be improved.

### BRIEF DESCRIPTION OF THE DRAWINGS

[Fig. 1] Fig. 1 is a side cross-sectional view showing arrangement of cargo holds in a bulk cargo ship of a first embodiment according to the present invention.
[Fig. 2] Fig. 2 is a horizontal plan view showing the arrangement of the cargo holds in the bulk cargo ship of Fig. 1.
[Fig. 3] Fig. 3 is a cross-sectional view of a ship body showing the structure of the cargo hold of the bulk cargo ship of Fig. 1.
[Fig. 4] Fig. 4 is a side cross-sectional view showing arrangement of cargo holds in a bulk cargo ship of a second embodiment according to the present invention.
[Fig. 5] Fig. 5 is a horizontal plan view showing arrangement of the cargo holds in the bulk cargo ship of Fig. 4.
[Fig. 6] Fig. 6 is a cross-sectional view of a ship body showing the structure of the cargo hold of the bulk cargo ship of Fig. 4.
[Fig. 7] Fig. 7 is a side cross-sectional view showing the structure of a bulk cargo ship having no covering structure for the cargo holds.
[Fig. 8] Fig. 8 is a cross-sectional view of a ship body showing the structure of the bulk cargo ship having no covering structure for the cargo holds.
[Fig. 9] Fig. 9 is a perspective view showing the configuration of the bulk cargo ship and on-shore cargo handling equipment used in a transportation method for the dry bulk cargo according to the present invention.

### BEST MODES FOR CARRYING OUT THE INVENTION

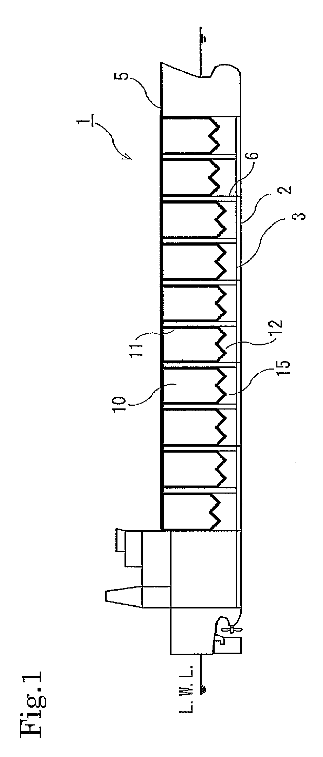

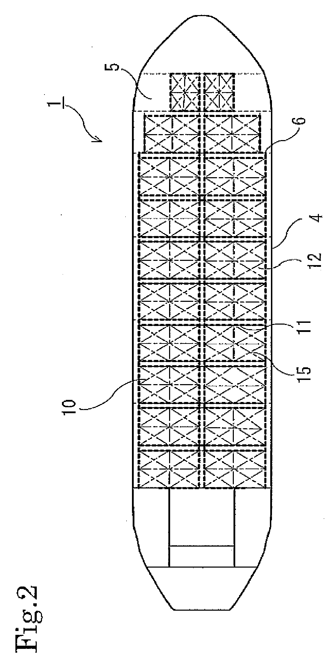

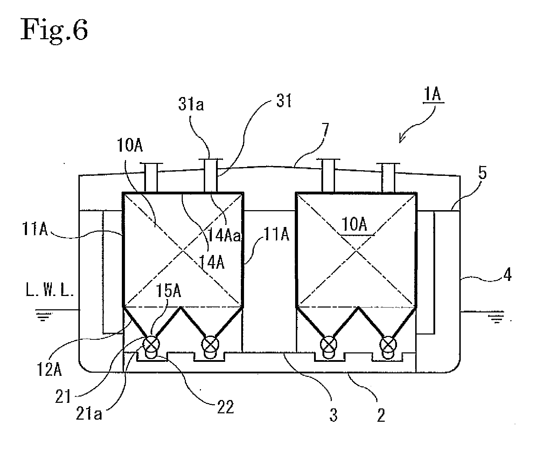

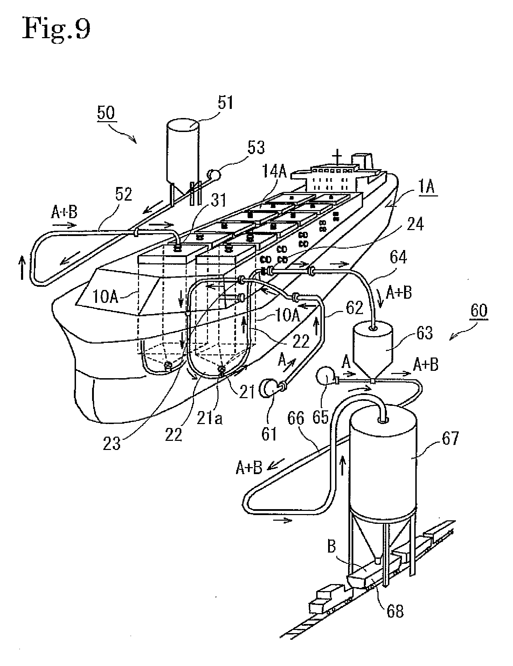

A bulk cargo ship and a bulk cargo barge according to the present invention will be described with reference to the drawings. Here, a bulk cargo ship having a propulsion system is described. However, the present invention may be applied similarly to a bulk cargo barge having no propulsion system. Here, the drawings are those for only description, and the drawings are not necessarily drawn in a dimensional ratio in a hull form or a cargo hold used for an actual ship. In addition, Fig. 9 is a drawing for describing a cargo handling method, and a ship body structure in Fig. 9 is different from ship body structures in Fig. 1 to Fig. 8 in the shape of a cargo hold and a discharge port.

As shown in Fig. 1 to Fig. 3, a bulk cargo ship 1 of a first embodiment according to the present invention is configured by including cargo holds 10 in which a dry bulk cargo is loaded. In the first embodiment, the cargo holds 10 are formed integrally with a ship body. In other words, sidewalls 11 and the like of the cargo holds 10 constitute part of the ship body structure.

These cargo holds 10 are arranged in rows with bulkheads 6 interposed therebetween in a ship-length direction, similar to a bulk cargo ship (a bulk carrier) of the conventional art. In addition, multiple cargo holds 10 are arranged also in a ship-width direction. With regard to the ship-width direction, the width of each cargo hold 10 is reduced by arranging the multiple cargo holds 10. In this way, moving range of the dry bulk cargo in each cargo hold 10 caused by motions of the ship body at the time of heavy weather and the like is reduced, and transversal moving distance of the dry bulk cargo is suppressed. In addition, the stability performance against roll is ensured.

In addition, the cargo holds 10 are arranged apart from a side plating 4. Along with this, the cargo hold walls are not formed with the side plating 4 and a bottom plate 2, and the cargo holds 10 are disposed also in such a manner as not to be adjacent to the a ballast tank. In this way, the cargo hold walls are configured so as not to come into contact with liquid such as sea water, water, ballast water, and fuel. With this configuration, generation of dew condensation by cooling the cargo hold walls of the cargo holds 10 is prevented, even when ballast water is poured into the ballast tank.

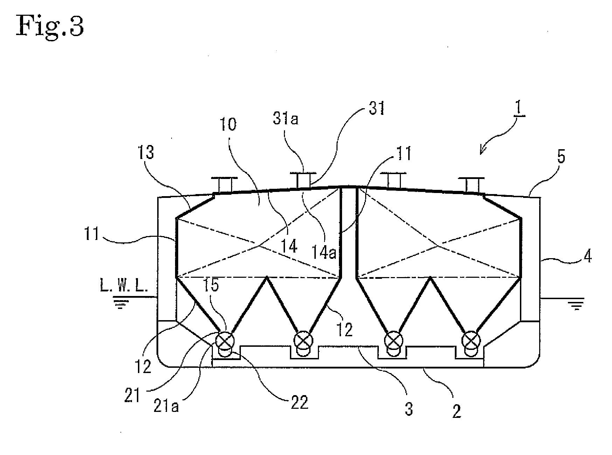

As shown in Fig. 3, each cargo hold 10 is formed as a section surrounded by sidewall portions 11, an inclined portion 13 in the upper portion at the ship lateral side, a ceiling portion 14, and inclined portions 12 in the lower portion. Each of the sidewall portions 11 is formed to extend vertically, and the ceiling portion 14 is formed of part of an upper deck 5. In addition, the ceiling portion 14 has an inlet port 14a for loading the dry bulk cargo. The inclined portions 12 in the lower portion are narrowed down to a discharge port 15 for discharging the cargo. In other words, each cargo hold wall is constituted of the inclined portions 12, the sidewall portions 11, the inclined portion 13, and the ceiling portion 14.

The cargo hold wall of each cargo hold 10 is formed by providing the cargo hold wall with no frame member protruding toward the inside and with no plate edge, so that the inner surface of the cargo hold 10 is smoothly formed. Specifically, in portions, forming the sidewall portions 11, of the bulkheads 6 separating the cargo holds 10 in the fore-aft direction, frame members are all disposed outside of the cargo holds 10, that is, in spaces between the cargo holds 10. In addition, each sidewall portion 11 at the boundary where the cargo holds 10 face each other in the lateral direction is not formed by a single plate provided with frame members, but constituted of two sidewall portions 11 with frame members sandwiched therebetween. For the other cargo hold walls, frame members are disposed outside the cargo hold 10. In this way, the amount of residue of the dry bulk cargo can be reduced. Moreover, the residue can be washed away by cleaning with water or compressed air because there is no shadow area. As a result, contamination at the time of loading a new cargo can be prevented.

In addition, the cargo hold wall of each cargo hold 10 is preferably formed by using a rust-resistant material, for example, clad steel (pressure bonded steel), which is obtained by bonding two types of metals having different properties, and more preferably by using a rust-proof metal, such as stainless steel (SUS) material, as the metal in the inner surface side. This makes it possible to transport also a dry bulk cargo that is not desired to come into contact with rust.

An inlet pipe 31 is provided at the inlet port 14a in the upper portion of each cargo hold 10. Each inlet pipe 31 is provided with a connection flange 31a, thereby being formed to be capable of being connected to a bulk cargo pipe on the landward side at the time of cargo loading. At the time of cargo loading, a cargo loading pipe (52 in Fig. 9) extending from the on-shore cargo handling equipment is connected to this inlet pipe 31 and the dry bulk cargo is dropped down naturally to be stored in the cargo hold 10. This inlet port 14a is preferably provided in the center of the inclined portion 12, that is, just above the discharge port 15 so that the dry bulk cargo can be stored in the cargo hold 10 evenly.

In addition, a valve is provided at the discharge port 15 of the discharge portion provided with the inclined portion 12 in the lower portion of the cargo hold 10, so that the dry bulk cargo being stored into the cargo hold at cargo loading is prevented from dropping down to a gas transport pipe 22. This valve is formed of a constant-flow discharge valve 21a such as a rotary valve. The gas transport pipe 22 is connected to the discharge port 15 through a discharge pipe 21 having this constant-flow discharge valve 21a. At the time of cargo unloading, the dry bulk cargo in the cargo hold 10 is slid on the inclined portion 12 by gravity to move to the discharge port 15 while the amount of the dry bulk cargo is adjusted to an amount transportable through the gas transport pipe 22 by the constant-flow discharge valve 21a. In this way, the dry bulk cargo is discharged to the gas transport pipe 22. The dry bulk cargo discharged into this gas transport pipe 22 is transported to the on-shore cargo handling equipment by gas transport. With regard to this gas transport, a transportation method with gas pressure using air or the like is used. Alternatively, a vacuum suction system may be used instead of the transport system with gas pressure.

Here, in the case of the dry bulk cargo which is not desired to be exposed to moisture, dried air is fed to the gas transport pipe 22. In this case, at the time of cargo handling such as loading and unloading, dried air is supplied into the cargo holds 10 and the gas transport pipes 22 from an air-feeding system including an air drying facility, a blower, or a compressor in the on-shore facility. On the other hand, at a time other than cargo handling and at the time of transporting, dried air is supplied into the cargo holds 10 from an air dryer and a blower installed on the ship. By these configurations, the dry bulk cargo in the cargo holds 10 is prevented from containing moisture. Here, in the case of the vacuum suction system, a vacuum pump is used instead of the air-feeding system.

In addition, when the bulk cargo ship 1 may call at a port where the on-shore facility is equipped with no air drying facility or air-feeding system, it is preferable that an air drying facility or an air-feeding system that has a capacity of unloading at least one or two cargo holds 10 be provided in the bulk cargo ship 1 so that the bulk cargo ship 1 can perform cargo handling by itself in such a port.

In addition, one or multiple discharge ports 15 are provided for each single cargo hold 10 (four in the cases of Fig. 1 to Fig. 8). Providing a plurality of discharge ports 15 enables the height of the inclined portion 12 around the discharge port 15 to be lowered, compared with a case where a single discharge port 15 is provided. In this way, the center of gravity of the cargo hold 10 as well as the center of gravity of the entire cargo hold 10 with the dry bulk cargo loaded therein can be lowered. Therefore, a degree of deterioration of the stability performance can be reduced although the position of the center of gravity becomes high and stability performance against roll of the ship body deteriorates when a dry bulk cargo having a small bulk specific gravity is loaded. In this way, lowering of the center of gravity and the stability performance against roll of the ship body can be ensured. In addition, the height of the inclined portion 12 is lowered, so that dead spaces formed around the outer side of the inclined portion 12 can be reduced.

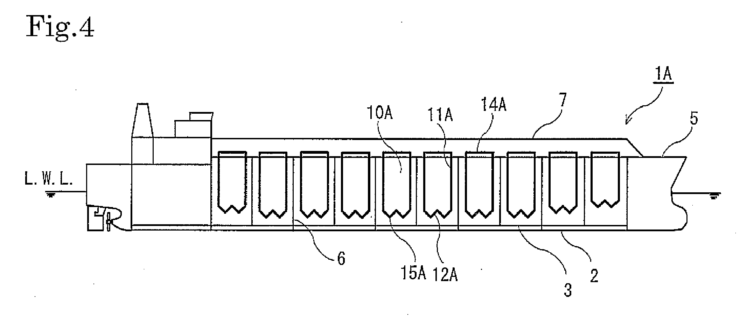

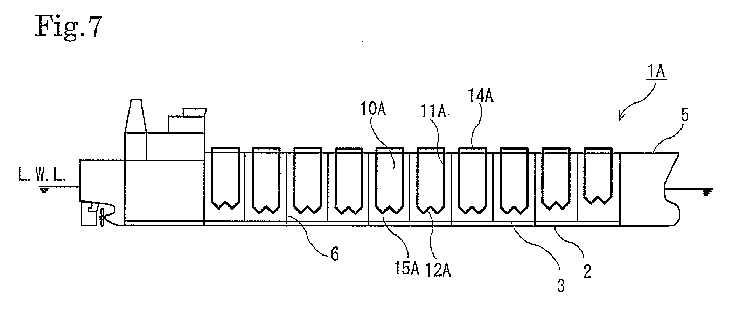

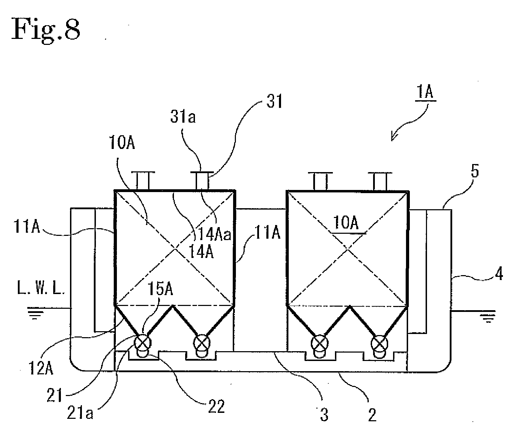

Next, a second embodiment will be described. As shown in Fig. 4 to Fig. 8, a bulk cargo ship 1A of the second embodiment according to the present invention is configured by including cargo holds 10A in which a dry bulk cargo is loaded, as similar to the bulk cargo ship 1 of the first embodiment. However, in the second embodiment, each of the cargo holds 10A is formed as a separate hold, and the cargo holds 10A of the separated hold structure are installed in the ship body. Note that, the bulk cargo ship 1A shown in Fig. 7 and Fig. 8 has a structure in which a covering structure 7 is not provided over the upper portion of the cargo holds 10A in the bulk cargo ship 1A shown in Fig. 4 to Fig. 6.

As shown in Fig. 4 to Fig. 8, each cargo hold 10A is formed as a section surrounded by sidewall portions 11A, a ceiling portion 14A and inclined portions 12A. Each of the sidewall portions 11A is formed to extend vertically, and the ceiling portion 14A has an inlet port 14Aa for loading the dry bulk cargo. In addition, the inclined portions 12A is narrowed down to a discharge port 15A for discharging. A cargo hold wall is constituted of the inclined portions 12A, the sidewall portions 11A and the ceiling portion 14A.

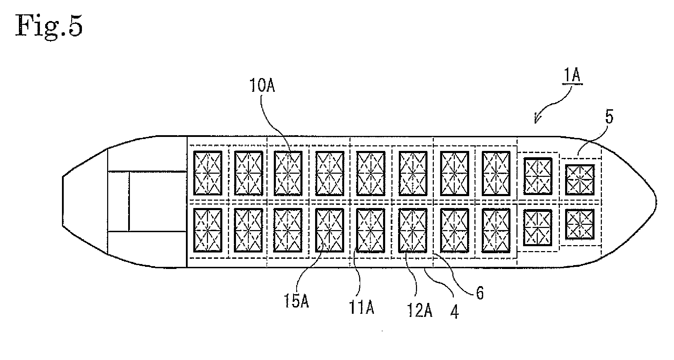

The horizontal cross-sectional shape of each cargo hold 10A is formed, in Fig. 5, into a rectangle capable of being easily provided with a plurality of discharge ports 15A. However, since each cargo hold 10A is a separated hold structure, the shape may be a circle, an oval, an ellipse, or the like. In addition, when each cargo hold 10A has a plurality of discharge ports 15A, the discharge ports 15A may be arranged in the fore-aft direction of the ship body, the lateral direction of the ship body, or any other directions. However, the discharge ports 15A are arranged in conformity with the arrangement of the gas transport pipe 22.

In addition, in the same manner as in the case of the cargo hold 10 of the first embodiment, the cargo hold wall of each cargo hold 10A is provided with no frame member protruding toward the inside and all of the frame member of the cargo hold wall are disposed outside the cargo hold 10A. With this configuration, the inner surface of the cargo hold 10A is formed smoothly.

By employing this separated hold system in which each of the cargo holds 10A is manufactured as a separate body and is installed in the ship body, a cargo hold can be installed in a ship body after a part which constitutes the cargo hold and which is formed of a rust-resistant material is manufactured separately from the ship body. Particularly, consider a case where the cargo hold wall of each cargo hold 10A is formed by using a special steel material such as clad steel as a rust-resistant material. In this case, the manufacture of a bulk cargo ship is extremely facilitated by separately manufacturing each cargo hold 10A and by installing, in the ship body, the cargo hold 10A in which a part formed of the rust-resistant metal is almost completed. In addition, it is also made possible to employ a cargo hold 10A formed of a non-metal material such as FRP as the rust-resistant material.

Moreover, each cargo hold 10A is protruded from the upper deck 5, and a portion between the sidewall portion 11A of each cargo hold 10A and the upper deck 5 is formed to have a watertight or weathertight structure. In this way, the manufacturing cost can be reduced because the steel materials for the ship body structure are reduced, compared with a configuration where the upper deck 5 is made to be the upper structure of each cargo hold 10. In addition, this structure is simplified compared with a structure in which each cargo hold 10 is completely covered with the upper deck 5 or a hatch cover (not illustrated) . Accordingly, the weight of the ship body can be reduced and the center of gravity of the ship body can be lowered. As a result, the stability performance against roll of the ship body can be easily ensured.

It should be noted that, since the upper portion of each cargo hold 10A is exposed, rise in temperature inside the cargo hold 10A should be taken into consideration, and heat protection using heat barrier coating or the like may be performed.

In addition, as shown in Fig. 4 to Fig. 6, when the covering structure 7 is provided on the upper portions of the cargo holds 10A, the ceiling portion 14A of each cargo hold 10A is not exposed to the atmosphere, so that a moisture prevention effect can be obtained particularly in the case of a dry bulk cargo that are not desired to be exposed to moisture.

The other configurations are the same as those of the bulk cargo ship 1 of first embodiment, such as the arrangement of the multiple cargo holds 10A in the fore-aft direction and in the lateral direction; the spaced arrangement from the ballast tank and the like; the use of clad steel; the inlet port 14Aa in the upper portion of each cargo hold 10A and the inlet pipe 31 for cargo loading; the discharge port 15A in the discharge portion provided with the inclined portion 12A in the lower portion of each cargo hold 10A, the constant-flow discharge valve 21a, the discharge pipe 21, and the gas transport pipe 22; and the feeding method of the dried air A; and the like.

Next, a transportation method for a dry bulk cargo will be described. This transportation method is a transportation method using the above-described bulk cargo ship 1, 1A, and the following cargo loading and cargo unloading of the dry bulk cargo are performed.

With reference to Fig. 9, the cargo loading and cargo unloading of the dry bulk cargo will be described. First, the cargo loading is performed as follows. The cargo loading pipe 52 is connected to a lower portion of a dry bulk cargo storage tank 51 of an on-shore loading equipment 50 in the on-shore cargo handling equipment and to the inlet pipe 31 provided in the ceiling portion 14A of the cargo hold 10A in the bulk cargo ship 1A. After that, the dried air A is fed from a loading air feeding system 53 to transport a dry bulk cargo B by gas transport to the inlet port 14A at the end of the inlet pipe 31. The dry bulk cargo B transported to the inlet port 14A is stored in the cargo hold 10A by free fall.

After the dry bulk cargo B is stored in each cargo hold 10A, the inlet pipe 31 is closed. After that, the cargo loading pipe 52 is detached and the cargo loading for the cargo hold 10A is completed. After the cargo loading for each cargo hold 10A is completed, the ship is prepared for departure, and then is sailed.

Next, the cargo unloading will be described. After the ship comes into a port, an air inflow pipe 62 connected to an unloading air feeding system 61 of on-shore unloading equipment 60 in the on-shore cargo handling equipment is connected to an air feeding port 23 (at an upper position of the side face of the upper portion of the ship body in Fig. 9) of the bulk cargo ship 1A. In addition, an unloading pipe 64 connected to an upper portion of a temporary storage tank 63 is connected to a cargo discharge port 24 (at a lower position of the side face of the upper portion of the ship body in Fig. 9) of the bulk cargo ship 1A.

After the connection, the unloading air feeding system 61 is driven to feed the dried air A from the air feeding port 23 to the gas transport pipe 22, and the dry bulk cargo B is supplied from the discharge port 15A of the cargo hold 10A to the gas transport pipe 22 with the flow rate adjusted by means of the constant-flow discharge valve 21a. In this way, the dry bulk cargo B is transported by gas transport to the temporary storage tank 63 through the gas transport pipe 22, the cargo discharge port 24, and the unloading pipe 64.

From this temporary storage tank 63, a storage air feeding system 65 is driven to convey the dry bulk cargo B to the upper portion of a storage tank 67 through a storage pipe 66, thereby storing the dry bulk cargo B in the storage tank 67. The dry bulk cargo B stored in this storage tank 67 is conveyed to various sites by a freight car 68 or the like.

After the dry bulk cargo B in the cargo hold 10A is unloaded, the flow of the air feeding port 23 is closed. After that, the unloading pipe 64 is detached and the cargo discharge port 24 is closed. In this way, the cargo unloading is completed and the ship is prepared for departure, and then is sailed.

According to the bulk cargo ships 1, 1A and the transportation method for a dry bulk cargo having the above-described configurations, particulates such as polymer pellets can be transported in bulk state without damaging the particulates, while such particulates have been packed in bags and transported using containers in order to avoid damage and contamination in the conventional art. In addition, the operation of packing particulates in bags, the operation of loading the bags into containers, the operation of taking the particulates out of the bags, and other operations that have been performed in the conventional art can be eliminated, so that the operation efficiency at the time of transport can be improved.

In addition, when a bulk cargo barge that has the same configuration of cargo holds 10, 10A as that of the above-described bulk cargo ships 1, 1A and has no propulsion system is formed, this bulk cargo barge can achieve the same effects as those of the above-described bulk cargo ships 1, 1A.

### INDUSTRIAL APPLICABILITY

The bulk cargo ship and the bulk cargo barge according to the present invention can achieve the above-described effects, and can be used for transportation of particulates and the like such as polymer pellets that have been packed in bags and transported using containers in order to avoid damage and contamination in the conventional art.

### EXPLANATION OF REFERENCE NUMERALS

- 1, 1A: bulk cargo ship
- 2: bottom plate
- 3: double hull (inner bottom plate)
- 4: side plating
- 5: upper deck
- 6: bulkhead
- 7: covering structure
- 10, 10A: cargo hold
- 11, 11A: sidewall portion
- 12, 12A: inclined portion
- 13: inclined portion in upper portion at ship lateral side
- 14, 14A: ceiling portion
- 14a, 14Aa: inlet port
- 15, 15A: discharge port
- 21: discharge pipe
- 21a: constant-flow discharge valve
- 22: gas transport pipe
- 23: air feeding port
- 24: cargo discharge port
- 31: inlet pipe
- A: dried air
- B: dry bulk cargo

## Claims

1. A bulk cargo ship on which a dry bulk cargo is loaded, the bulk cargo ship **characterized in that**
a cargo hold wall of a cargo hold in which the dry bulk cargo is loaded is formed smoothly while no frame member protruding toward an inside of the cargo hold is provided on the cargo hold wall,
a discharge port having an inclined portion is provided in a lower portion of the cargo hold, and
a gas transport pipe for unloading, by means of a flow of gas, the dry bulk cargo discharged from the discharge port through a valve is provided to be connected to the discharge port.

2. The bulk cargo ship according to claim 1, **characterized in that**
the cargo hold is configured by including:
an inlet port in an upper portion of the cargo hold, the inlet port allowing the dry bulk cargo to be dropped down therethrough; and
a plurality of discharge portions provided in a lower portion of the cargo hold, the plurality of discharge portions each having an inclined portion.

3. The bulk cargo ship according to claim 1 or 2, **characterized in that** a plurality of the cargo holds are disposed in a width direction of the ship.

4. The bulk cargo ship according to any one of claims 1 to 3, **characterized in that** the cargo hold wall of the cargo hold has such a structure as not to come into contact with liquid.

5. The bulk cargo ship according to any one of claims 1 to 4, **characterized in that** the cargo hold is installed in a ship body while a part of the cargo hold is manufactured separately from the ship body, the part being formed of a rust-resistant material.

6. The bulk cargo ship according to claim 4 or 5,
**characterized in that**
the cargo hold protrudes from an upper deck, and
a portion between a sidewall of the cargo hold and the upper deck is formed to have a watertight or weathertight structure.

7. A bulk cargo barge **characterized in that** the bulk cargo barge is obtained by forming the bulk cargo ship according to any one of claims 1 to 6 into a barge ship having no propulsion system.
